# EUROPÄISCHE PATENTSCHRIFT

(11) **EP 0 935 760 B1**
(45) Veröffentlichungstag und Bekanntmachung des Hinweises auf die Patenterteilung: **05.02.2003**
(21) Anmeldenummer: 97942782.0
(22) Anmeldetag: 04.09.1997
(51) Int. Cl.: G01S 5/14, G01S 3/52, G01C 21/20

(54) **ORTUNGSSYSTEM FÜR EIN KRAFTFAHRZEUG MIT EINEM SATELLITENEMPFÄNGER**
POSITION LOCATION SYSTEM FOR VEHICLE FITTED WITH A SATELLITE SIGNAL RECEIVER
SYSTEME DE LOCALISATION POUR VEHICULE DOTE D'UN RECEPTEUR DE SATELLITE

(30) Priorität: 02.11.1996 DE 19645209
(43) Veröffentlichungstag der Anmeldung: 18.08.1999
(73) Patentinhaber: ROBERT BOSCH GMBH, 70442 Stuttgart (DE)
(72) Erfinder: KREFT, Peter, D-30539 Hannover (DE)
(86) Internationale Anmeldenummer: DE9701945
(87) Internationale Veröffentlichungsnummer: WO98020359

(56) Entgegenhaltungen:
- EP-A- 0 580 167
- EP-A- 0 699 894
- EP-A- 0 716 289
- US-A- 4 807 127
- US-A- 4 890 233

## Beschreibung

### Stand der Technik

Die Erfindung geht aus von einem Ortungssystem für ein Kraftfahrzeug mit einem Satellitenempfänger nach der Gattung des Hauptanspruchs. Aus der EP 0 496 538 A2 ist schon bekannt, mit Hilfe des Satellitenempfängers nicht nur die Position des Fahrzeugs zu berechnen, sondern auch dessen Fahrtrichtung. Dabei wird die Fahrtrichtung dadurch ermittelt, daß aus jeweils zwei Positionsbestimmungen die Differenzen errechnet werden. Dieses Verfahren funktioniert nur dann zufriedenstellend, wenn über große Distanzen die GPS-Positionen gemessen werden, da jede einzelne Position stark fehlerbehaftet ist (bei ziviler Nutzung: ca. 100 m).

Eine Fahrrichtungsermittlung in Echtzeit ist daher mit diesem Verfahren nicht möglich. Zudem geht dieses Verfahren von keinem oder nur sehr geringen Koppelsensorfehlern während der GPS-Messung aus, in der Praxis ist dies jedoch nur selten der Fall.

EP-A-0 716 289 offenbart ein Ortungssystem, bei dem in einem ersten Schritt die im Umkreis einer aufgrund Sensor- und Satellitensignalen vorläufig bestimmten Position liegenden Straßenabschnitte, die als Verbindungen von Knotenpunkten abgespeichert sind, aus einer digitalen Karte als potentielle Standorte ausgewählt werden,
in einem zweiten Schritt die Richtungen der ausgewählten Streckenabschnitte mit einer toleranzbehafteten vorläufig ermittelten Fahrtrichtung verglichen und als potentielle Standorte nur die Streckenabschnitte ausgewählt werden, deren Richtung innerhalb des Toleranzbereichs liegt, in einem dritten Schritt für die Menge der ausgewählten Streckenabschnitte ein Verläßlichkeitsfaktor als Funktion des Abstandes des jeweiligen Streckenabschnitts von der vorläufig bestimmten Position und der Differenz zwischen der vorläufig ermittelten Fahrtrichtung und der Richtung des Streckenabschnitts ermittelt wird,
und schließlich der Streckenabschnitt mit dem höchsten Wert des Verläßlichkeitsfaktors als tatsächlicher Standort ausgewählt wird.

Es wird also bei EP-A-0 716 289 bei jeder neuen Bestimmung des aktuellen Fahrzeugstandortes und der aktuellen Fahrtrichtung im Falle mehrerer möglicher Straßenabschnitte ein von der Vorgeschichte unabhängiger Verläßlichkeitsfaktor bestimmt, also der neue Hauptpfad ohne Berücksichtigung des alten Hauptpfades ermittelt.

EP-A-0 580 167 offenbart ein Fahrzeugnavigationssystem mit der Möglichkeit der Neuberechnung einer Route vom aktuellen Standort zum Zielort für den Fall, daß das Fahrzeug die vorher berechnete Route verlassen hat. In Spalte 16, Zeile 41 bis Spalte 17, 33 findet sich ein Vorschlag zur Verbesserung der Ortungsgenauigkeit im Falle zweier parallel laufender Straßen, insbesondere zur Bestimmung des exakten Fahrzeugstandortes auf einer der parallel verlaufenden Straßen. Zur Lösung dieser Aufgabe wird vorgeschlagen, daß für den Fall, daß der Fahrzeugführer beispielsweise anhand der Zielführungshinweise des Navigationssystems feststellt, daß die der aktuellen Zielführung zugrundegelegte Fahrzeugposition auf einer zur aktuell befahrenen Straße parallel verlaufenden Straße liegt, durch Betätigung eines Schalters eine Neuberechnung der Fahrtroute vom aktuellen Fahrzeugstandort zum Zielort veranlaßt. Durch Betätigung des Schalters wird außerdem das Fahrzeugnavigationssystem veranlaßt, in der digitalen Karte nach einer am aktuellen Fahrzeugstandort zur vermeintlich aktuell befahrenen Straße parallel verlaufende Straße zu suchen. In dem Fall, daß eine solche Parallelstraße existiert, wird der der Zielführung zugrundegelegte Fahrzeugstandort von der aktuellen Straße auf diese parallele Straße verschoben und ausgehend von diesem korrigierten Fahrzeugstandort eine Routenberechnung angestoßen.

### Vorteile der Erfindung

Das erfindungsgemäße Verfahren mit den Merkmalen des Hauptanspruchs hat den Vorteil, daß die Bestimmung der Fahrtrichtung mit Hilfe des Satellitenempfängers nicht durch die Ortungsgenauigkeit beeinträchtigt wird und die Fahrtrichtungsermittlung nahezu in Echtzeit erfolgt. Weiter ist von Vorteil, daß zunächst für die Fahrtrichtung des Kraftfahrzeugs ein Fahrtrichtungsfächer angenommen wird, der die Fahrtrichtung mit einem vorgegebenen Toleranzfeld enthält. Mit Hilfe des Fahrtrichtungsfächers und einer Priorisierung eines Hauptpfades wird vorteilhaft recht genau die tatsächliche Fahrtrichtung und der Standort des Kraftfahrzeugs ermittelt.

Gegenüber dem genannten Stand der Technik zeichnet sich das erfindungsgemäße Ortungssystem in vorteilhafter Weise dadurch aus, daß bei unklaren Bestimmungen, insbesondere einem engen Straßennetz mit parallel verlaufendem Pfaden der bisherige Hauptpfad beibehalten wird. Dadurch wird vermieden, daß durch mehrfachen Wechsel zwischen einem Haupt- und einem Nebenpfad der Fahrer des Kraftfahrzeugs über die tatsächliche Fahrtrichtung verunsichert wird.

Durch die in den abhängigen Ansprüchen aufgeführten Maßnahmen sind vorteilhafte Weiterbildungen und Verbesserungen des im Hauptanspruch angegebenen Ortungssystems möglich. Besonders vorteilhaft ist, daß die Fahrtrichtung des Kraftfahrzeugs während der Fahrt nach dem Dopplerverfahren aus den empfangenen Satellitenfrequenzen (Trägerwelle) bestimmt wird. Bei handelsüblichen GPS-Empfängern kann mit Hilfe des Doppler-Effektes ein Geschwindigkeitsvektor des Fahrzeugs in Fahrtrichtung mit 0,1 m/s bis 0,2 m/s bestimmt werden. Jedoch sinkt die Genauigkeit duch die künstliche Verschlechterung der Satelliten-Signale durch den GPS-Betreiber. Je größer die Fahrzeuggeschwindigkeit ist, umso genauer ist die Ermittlung des Geschwindigkeitsvektors möglich. Um nun die Richtung des Geschwindigkeitsvektors mit ausreichender Genauigkeit zu erhalten, muß die Fahrzeuggeschwindigkeit deutlich über diesem Betrag liegen. Denn bei höherer Geschwindigkeit können auch die durch den GPS-Betreiber (Department of Defence, USA) durchgeführten Manipulationen der Trägerfrequenz (selective Availability) vernachlässigt werden. Versuche haben gezeigt, daß ein GPS-Empfänger bereits ab ca. 15 km/h brauchbare Ergebnisse liefert.

Da die Richtungsbestimmung mit Hilfe des GPS-Empfängers als Absolutfahrtrichtungsmessung zu betrachten ist, kann vorteilhaft ein Richtungssensor, beispielsweise ein Drehratensensor oder Gyrosensor kalibriert werden. Bei einer Empfangsunterbrechung kann dann der kalibrierte Richtungssensor vorteilhaft die absolute Fahrtrichtung des Kraftfahrzeugs erfassen.
Vorteilhaft ist weiter, daß der Rechner des Ortungssystems zur Positionsbestimmung mit Hilfe des Richtungsfächers einen Haupt- und gegebenenfalls Nebenpfade bestimmt. Durch eine Wichtung des Hauptpfades und der Nebenpfade ergibt sich ein neuer Hauptpfad, dessen Richtung am Ort der vermuteten Position mit der des Richtungsfächers am besten übereinstimmt. Durch die Wichtung der einzelnen Pfade ist die Bestimmung der Fahrtrichtung und der Fahrzeug-Position sehr zuverlässig, da das Fahrzeug lediglich auf einer der erfaßten Pfade (Straßen) fahren kann.

### Zeichnung

Ein Ausführungsbeispiel der Erfindung ist in der Zeichnung dargestellt und wird in der Beschreibung näher erläutert. Figur 1 zeigt ein Blockschaltbild des Ortungssystems und die Figuren 2 und 3 zeigen die Wirkungsweise der erfindungsgemäßen Koppelortung.

### Beschreibung des Ausführungsbeispiels

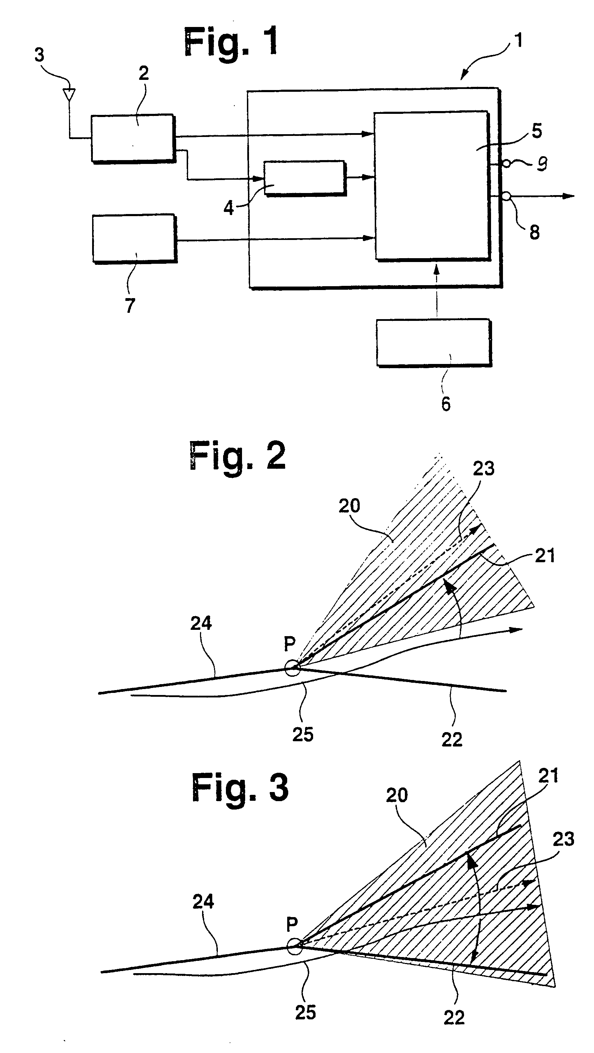

Figur 1 zeigt ein Blockschaltbild eines Ortungssystems, das per se bekannt ist und daher im Detail nicht näher beschrieben werden muß. Es enthält einen Rechner 5 zur Berechnung der Fahrtrichtungen und der Positionen der Pfade. An das Ortungssystem ist desweiteren ein Satellitenempfänger 2 angeschlossen, der Satellitensignale über eine Antenne 3 empfängt und auswertet. Ein Ausgang des Satellitenempfängers 2 ist mit einer Fehlerschätzvorrichtung 4 verbunden, mit der ein Fahrtrichtungsfächer bestimmbar ist. Der Satellitenempfänger 2 ist vorzugsweise ein GPS-Empfänger zum Empfang GPS-Satellitensignalen und/oder ein entsprechender Empfänger für GLONASS-Satelliten. Die Fehlerschätzvorrichtung 4 ist ausgangsseitig mit dem Rechner 5 verbunden. An das Ortungssystem 1 sind weitere Sensoren zur Bestimmung der Fahrzeugposition, des Fahrweges und/oder der Fahrtrichtung anschließbar. Als weitere Sensoren 7 können beispielsweise für die Fahrtrichtungsbestimmung ein Sensor, vorzugsweise ein Gyrosensor oder ein elektronischer Kompaß vorgesehen sein. An den Rechner 5 ist weiterhin ein Speicher 6 für eine digitale Straßenkarte anschließbar. An einem Ausgang 8 des Ortungssystems 1 ist eine Größe für die momentane Fahrtrichtung des Kraftfahrzeugs abgreifbar und am Ausgang 9 die wahrscheinlichste Position des Fahrzeugs (Hauptpfad).

Im Ausführungsbeispiel der Figur 1 wird angenommen, daß der Satellitenempfänger 2 ein GPS-Empfänger (Global Positioning System) ist. Aus den mittels der Antennte 3 empfangenen Satellitensignalen des GPS-Systems wird einerseits die momentane Fahrzeugposition berechnet. Andererseits ermittelt der GPS-Empfänger 2 die momentane Fahrzeuggeschwindigkeit aus der Frequenzverschiebung nach dem Doppler-Verfahren. Da der GPS-Empfänger 2 die Trägerfrequenzen von mehreren Satelliten empfängt, ergibt sich zu jedem Satelliten ein Geschwindigkeitsvektor. Durch Projektion der Geschwindigkeitsvektoren auf die Fahrebene erhält man einen Richtungsvektor für die aktuelle Fahrtrichtung des Fahrzeugs, der allerdings systembedingt fehlerbehaftet ist.

Als Maß für die Genauigkeit der gemessenen Fahrzeug-Fahrtrichtung kann neben dem Geschwindigkeitsbetrag auch der sogenannte GDOP-Wert (Geometric Deliution Of Precicion) berücksichtigt werden, der die Zeitfehler und die Satellitengeometrie berücksichtigt.

Wegen der genannten Systemfehler der GPS-Satelliten berechnet die Fehlerschätzvorrichtung 4 in Fahrtrichtung des Fahrzeuges einen toleranzbehafteten Vektor für die mögliche Fahrtrichtung. Durch diese toleranzbehaftete Fahrtrichtung, im folgenden Fahrtrichtungsfächer 20 genannt, ist die tatsächliche Fahrtrichtung des Fahrzeugs nicht genau bestimmbar. Anhand der Figuren 2 und 3 wird nun erläutert, wie erfindungsgemäß dennoch aus diesen Berechnungen und Fehlerschätzungen auf die tatsächliche Fahrtrichtung des Kraftfahrzeugs geschlossen werden kann.

Voraussetzung für das Ortungssytem 1 ist, daß dieses neben dem GPS-Empfänger 2 auch einen Speicher 6 für eine digitale Straßenkarte aufweist. Aus den Einzelsignalen des GPS-Empfängers 2, der weiteren Sensoren 7 und der digitalen Straßenkarte des Speichers 6 berechnet nun der Rechner 5 durch 'map matching' eine mögliche Fahrzeugposition. Figur 2 zeigt nun einen Ausschnitt aus einem digitalen Straßenplan mit einer Straße 24, von der im Punkt P zwei Straßen 21 und 22 abzweigen. Bewegt sich zunächst das Kraftfahrzeug auf der Straße 24, dann kann die Fahrzeugposition beispielsweise mit den weiteren Sensoren 7 mitgekoppelt werden. Da diese Sensoren ebenfalls fehlerbehaftete Signale für die Fahrzeugposition liefern, zeigt Figur 2 eine Kurve 25 für die mitgekoppelten Positionen, die neben der Straße 24, 21, 22 verlauten. Es wird nun angenommen, daß sich das Fahrzeug über den Punkt P hinaus in die Straße 21 abbiegt. Die weiteren Sensoren 7 zur Richtungsbestimmung, beispielsweise ein Gyrosensor oder ein Kompaß würden zwar ebenfalls eine Richtungsänderung feststellen, erkennen jedoch nicht eindeutig, daß sich das Fahrzeug auf der Straße 21 befindet, wie der Verlauf der Kurve 25 zeigt. Denn der mitgekoppelte Verlauf der Koppelortung 25 (Kurve) verläuft zwischen den Straßen 21 und 22. Wird dieser Verlauf zusammen mit den Straßen 24, 21, 22 auf einem Bildschirm angezeigt, dann ist nicht erkennbar, auf welcher Straße sich der Fahrer tatsächlich befindet. Allenfalls stellt er fest, daß er sich mit seinem Fahrzeug nicht zwischen, sondern auf einer der Straßen 21, 22 befindet.

Erfindungsgemäß wird nun das Geschwindigkeitssignal des GPS-Empfängers 2 ausgewertet. Aufgrund der bekannten Toleranzen berechnet die Fehlerschätzvorrichtung 4 beispielsweise im Punkt P für das Fahrzeug einen Fahrtrichtungsfächer 20, der in Figur 2 dunkel abgebildet ist. Aufgrund des Geschwindigkeitssignals, das mittels der Frequenzverschiebung nach dem Doppler-Verfahren berechnet wurde, ergibt sich ein Richtungsvektor 23 für die momentane Fahrtrichtung des Fahrzeugs. Der Richtungsvektor 23 (punktierte Linie) liegt mittig innerhalb des Fahrtrichtungsfächers 20 und verläuft nahezu parallel zur Straße 21. Durch Vergleich der einzelnen Straßenwinkel stellt der Rechner 5 nun fest, daß nur die Straße 21 innerhalb des Fahrtrichtungsfächers 20 liegt, während die Straße 22 außerhalb des Fahrtrichtungsfächers 20 liegt. Da auch der Richtungsvektor 23 in etwa parallel zur Straße 21 verläuft, erhält die Straße 21 die höchste Priorität für die momentane Fahrzeugposition und -richtung, während die Straße 22 als Nebenpfad eine niedrigere Priorität erhält. Der Rechner 5 wählt die Straße 21 als Hauptpfad aus und gibt deren Richtung als Fahrtrichtung für das Fahrzeug an. Dieses Signal ist am Ausgang 8 des Ortungsgeräts 1 abgreifbar und beispielsweise auf einem Display ausgebbar. Die Straße 22 wird als Nebenpfad nicht weiter verfolgt, da sie außerhalb des Richtungsfächers liegt. Der Rechner 5 verfolgt den Hauptpfad 21 und möglicherweise einen oder mehrere Nebenpfade 22 weiter und prüft, ob ein Nebenpfad als neuer Hauptpfad auswählbar ist. Im Ausnahmefall kann es vorkommen, daß zwei parallel verlaufende Straßen so dicht nebeneinander liegen, daß beide Straßen als Hauptpfad in Frage kommen könnten. In diesem Fall bleibt der bisherige Hauptpfad so lange erhalten, bis eine eindeutige Hauptpfad-Entscheidung möglich ist. Dadurch wird vermieden, daß durch ein Hin- und Herspringen von einem Pfad auf einen anderen Pfad der Fahrer des Fahrzeuges verunsichert wird (Bewertungshysterese).

Figur 3 zeigt den gleichen Straßenplanausschnitt mit den Straßen 24, 21, 22, wie er in Figur 2 dargestellt wurde. Es wird jedoch angenommen, daß im Punkt P der Fahrtrichtungsfächer 20 so ausgelegt ist, daß er beide Straßen 21, 22 erfaßt. Es wird weiter angenommen, daß der Richtungsvektor 23 gemäß des gepunktet dargestellten Pfeiles etwa zwischen den beiden Straßen 21, 22 verläuft. Die von den weiteren Sensoren 7, beispielsweise den Gyrosensor vorgegebene Fahrtrichtung 25 verläuft etwa parallel zum Richtungsvektor 23 des Fahrtrichtungsfächers 20. Sowohl die beispielsweise integrierte Richtung 25 eines differentiellen Gyrosensors 7 als auch der Richtungsvektor 23 des Fahrtrichtungsfächers 20 liegen somit zwischen den beiden Richtungsverläufen der Straßen 21 und 22. Die Winkeldifferenz zum Verlauf der Straße 21 ist jedoch geringer als zum Verlauf der Straße 22. Somit wird die Straße 21 als neuer Hauptpfad ausgewählt. Der Richtungsvektor 23 des Hauptpfades bzw. die vom Gyrosensor 7 bestimmte Fahrtrichtung 25 wird auf den Richtungsverlauf der Straße 21 adaptiert. Mit diesem Verfahren kann somit ein absoluter Fahrtwinkel eines integrierenden Richtungssensors 7 durch Adaption auf den in Frage kommenden Straßenverlauf korrigiert und der Richtungssensor 7 kalibiriert werden.

Da jedoch auch der Nebenpfad 22 weiter plausibel ist, wird solange dieser plausibel bleibt, die Fahrtrichtung für ihn nun auf den Richtungsverlauf der Straße 22 adaptiert. Somit erhalten der Hauptpfad und alle Nebenpfade eine eigenständige Fahrtrichtungsberechnung.

Mit dem oben beschriebenen Verfahren kann vorteilhaft mit Hilfe der Satellitennavigation ein Winkelsensor oder ein Drehraten-Sensor derart kalibriert und bezüglich der absoluten Fahrtrichtung initialisiert werden, daß sich eine absolute Fahrtrichtung für das Kraftfahrzeug ergibt. Insbesondere das GPS-System stellt daher eine vorteilhafte Ergängzung zu einem Ortungssystem mit einem differenziellen Winkelsensor dar. Besonders vorteilhaft ist, daß die GPS-Messungen eine gute Langzeitstabilität aufweisen, während ein differenzieller Winkelsensor dagegen nur eine Kurzzeitstabilität hat. Andererseits kann der differenzielle Winkelsensor mit hinreichender Genauigkeit für die Fahrtrichtungsermittlung herangezogen werden, wenn beispielsweise aufgrund zu geringer Fahrzeuggeschwindigkeit die Ausnutzung des Doppler-Effektes zu gering ist oder der Satellitenempfang gestört ist.

In weiterer Ausgestaltung der Erfindung ist vorgesehen, anstelle des differenziellen Winkelsensors 7 einen elektronischen Kompaß zu verwenden. Da der elektronische Kompaß, beispielsweise ein Zweiachs-Magnetometer durch magnetische Störfelder eine falsche Nordrichtung vorgeben kann, erfolgt die Kalibrierung ebenfalls mit Hilfe der GPS-Satelliten, wie es zuvor beschrieben wurde.

Die Auswertung der verschiedenen Fahrtrichtungsinformationen erfolgt beispielsweise mit einem Kalman-Filter oder nach dem Prinzip der Koppelortung. Bei Verwendung eines differenziellen Richtungssensors 7 ist vorgesehen, daß der Fehler, der über die Zeit integriert koninuierlich anwächst, mit Hilfe der nach dem Doppler-Verfahren berechneten Fahrtrichtung bestimmt wird. Auch in diesem Fall ist der Richtungsfächer priorisiert gegenüber der durch weitere Sensoren 7 bestimmten Fahrtrichtung.

## Patentansprüche

1. Ortungssystem für ein Kraftfahrzeug, mit einem Satellitenempfänger, vorzugsweise für den Empfang von Signalen der GPS- und/oder GLONASS-Satteliten, wobei der Satellitenempfänger ausgebildet ist, für eine vermutete Position des Kraftfahrzeugs aus den empfangenen Signalen toleranzbehaftete Fahrtrichtungen in Form eines Fahrtrichtungsfächers zu berechnen, mit einem wegsensor, mit einer digitalen Straßenkarte und mit einem Rechner zur Bestimmung der tatsächlichen Fahrtrichtung an der vermuteten Position des Kraftfahrzeugs, wobei
- der Rechner (5) ausgebildet ist, für die Straßen (21, 22, 24) eines Teilgebietes der digitalen Straßenkarte einen Hauptpfad (21) und gegebenenfalls Nebenpfade (22) zu bestimmen, auf denen die augenblickliche Position des Kraftfahrzeugs vermutet wird,
- die Richtungen des Hauptpfades und gegebenenfalls der Nebenpfade (22) mit dem Fahrtrichtungsfächer (20) des Satellitenempfängers (2) verglichen werden,
- der Richtungsfächer (20) derart priorisiert wird, daß nur der Hauptpfad (21) und gegebenenfalls die Nebenpfade (22) weiterverfolgt werden, deren Richtungen an der vermuteten Position des Kraftfahrzeugs innerhalb des Richtungsfächers (20) verlaufen und
- bei unklaren Bestimmungen, insbesondere bei parallel verlaufenden Pfaden, beispielsweise innerhalb eines engen Straßennetzes, der bisherige Hauptpfad erhalten bleibt.

2. Ortungssystem nach Anspruch 1, **dadurch gekennzeichnet, daß** der Satellitenempfänger (2) die Fahrtrichtung des Kraftfahrzeuges aus der Frequenzänderung der während der Fahrt des Kraftfahrzeuges empfangenen Satellitenfrequenzen nach dem Doppler-Verfahren ermittelt.

3. Ortungssystem nach Anspruch 1 oder 2, **dadurch gekennzeichnet, daß** das Ortungssystem einen Richtungssensor oder Drehratensensor (7) aufweist und daß das ermittelte Richtungsergebnis dieses Sensors (7) auf den Richtungswert des momentanen vom Satellitenempfänger (2) vorgegebenen Richtungsvektor aufsetzbar oder korrigierbar ist.

4. Ortungssystem nach Anspruch 3, **dadurch gekennzeichnet, daß** der Richrungssensor (7) ein Gyrosensor ist.

5. Ortungssystem nach einem der Ansprüche 1 bis 4, **dadurch gekennzeichnet, daß** die Größe des Richtungsfächers (20) durch die Systemfehler des Satellitenempfängers (2) und/oder des Ortungssystems (1) vorgebbar ist.

6. Ortungssystem nach einem der vorhergehenden Ansprüche, **dadurch gekennzeichnet, daß** der Rechner (5) am Ort der vermuteten Position zu jedem Pfad (24,21,22) einen Richtungsvektor (25) bestimmt.

7. Ortungssystem nach einem der vorhergehenden Ansprüche, **dadurch gekennzeichnet, daß** der Rechner (5) den Hauptpfad (21) und die Nebenpfade (22) wichtet und den Pfad als neuen Hauptpfad (21) bestimmt, dessen Richtung am Ort der vermuteten Positionen mit der des Richtungsfächers (23) am besten übereinstimmt.

8. Ortungssystem nach einem der vorhergehenden Ansprüche, **dadurch gekennzeichnet, daß** der Rechner (5) am Ort der vermuteten Positionen die einzelnen Fahrtrichtungen mit den Straßenverläufen im Teilgebiet der gespeicherten Straßenkarte vergleicht und den Pfad als neuen Hauptpfad bestimmt, der die größte Übereinstimmung aufweist.

## Claims

1. Locating system for a motor vehicle, having a satellite receiver, preferably for receiving signals of the GPS and/or GLONASS satellites, the satellite receiver being designed to calculate travel directions, subject to tolerances, in the form of a travel direction fan for a suspected position of the motor vehicle from the received signals, having a position sensor, having a digital road map and having a computer for determining the actual travel direction at the suspected position of the motor vehicle,
- the computer (5) being designed to determine, for the roads (21, 22, 24) of a region of the digital road map, a main path (21) and if appropriate secondary paths (22) on which the instantaneous position of the motor vehicle is suspected,
- the directions of the main path and if appropriate of the secondary paths (22) being compared with the travel direction fan (20) of the satellite receiver (2),
- the direction fan (20) being prioritized in such a way that only the main path (21) and if appropriate the secondary paths (22) whose directions run within the direction fan (20) at the suspected position of the motor vehicle are pursued, and
- when there are unclear determinations, in particular in the case of paths which run in parallel, for example within a dense road network, the previous main path is retained.

2. Locating system according to Claim 1, **characterized in that** the satellite receiver (2) uses the Doppler method to determine the travel direction of the motor vehicle from the change in frequency of the satellite frequencies received while the motor vehicle is travelling.

3. Locating system according to Claim 1 or 2, **characterized in that** the locating system has a directional sensor or rotational speed sensor (7), and **in that** the directional value of the instantaneous directional vector predefined by the satellite receiver (2) can have the acquired directional result of this sensor (7) applied to it or can be corrected with it.

4. Locating system according to Claim 3, **characterized in that** the directional sensor (7) is a gyrosensor.

5. Locating system according to one of Claims 1 to 4, **characterized in that** the size of the directional fan (20) can be predefined by the system errors of the satellite receiver (2) and/or of the locating system (1).

6. Locating system according to one of the preceding claims, **characterized in that** the computer (5) determines a directional vector (25) at the location of the suspected position for each path (24, 21, 22).

7. Locating system according to one of the preceding claims, **characterized in that** the computer (5) weights the main path (21) and the secondary paths (22) and determines that path whose direction corresponds best to that of the directional fan (23) at the location of the suspected positions as a new main path (21).

8. Locating system according to one of the preceding claims, **characterized in that**, at the location of the suspected positions, the computer (5) compares the individual travel directions with the road profiles in the region of the stored road map and determines that path which has the greatest degree of correspondence as a new main path.

## Revendications

1. Système de localisation d'un véhicule équipé d'un récepteur de satellite, de préférence pour recevoir les signaux de satellite GPS et/ou GLONASS, le récepteur de satellite étant réalisé pour calculer une position présumée du véhicule à partir des signaux reçus de la direction de déplacement entachée de tolérance sous la forme d'un éventail de directions de déplacement, comprenant un capteur de trajet avec une carte routière numérique et un calculateur pour déterminer la direction de déplacement effective à partir de la position présumée du véhicule,
- dans lequel le calculateur (5) est réalisé pour déterminer un chemin principal (21) et le cas échéant des chemins auxiliaires (22) pour les routes (21, 22, 24) d'une partie de la zone de la carte routière numérique, chemins sur lesquels la position instantanée du véhicule automobile est présumée,
- les directions du chemin principal et le cas échéant des chemins auxiliaires (22) sont comparées à l'éventail des directions (20) du récepteur satellite (2),
- l'éventail de directions (20) est positionné pour ne suivre que le chemin principal (21) et le cas échéant les chemins auxiliaires (22) dont les directions se situent dans l'éventail de directions (20) pour la position présumée du véhicule, et
- en cas de détermination non claire, notamment en cas de chemins parallèles, par exemple dans un réseau routier dense, on conserve le chemin principal utilisé jusqu'alors.

2. Système de localisation selon la revendication 1,
**caractérisé en ce que**
le récepteur satellite (2) détermine la direction de déplacement du véhicule à partir de la variation de fréquence des fréquences satellites reçues pendant le déplacement du véhicule en appliquant le procédé Doppler.

3. Système de localisation selon l'une quelconque des revendications 1 ou 2,
**caractérisé en ce qu'**
il comprend un capteur de direction ou capteur de vitesse de rotation (7) et le résultat de direction fourni par ce capteur (7) est appliqué à la valeur de direction du vecteur directionnel prédéterminé instantanément par le récepteur de radio satellite (2) ou encore cette valeur peut être corrigée.

4. Système de localisation selon la revendication 3,
**caractérisé en ce que**
le capteur de direction (7) est un capteur gyroscopique.

5. Système de localisation selon l'une quelconque des revendications 1 à 4,
**caractérisé en ce que**
l'amplitude de l'éventail de directions (20) est prédéterminée par l'erreur systématique du récepteur de satellite (2) et/ou du système de localisation (1).

6. Système de localisation selon l'une quelconque des revendications précédentes,
**caractérisé en ce que**
le calculateur (5) détermine à l'endroit de la position présumée un vecteur de direction (25) pour chaque chemin (24, 21, 22).

7. Système de localisation selon l'une quelconque des revendications précédentes,
**caractérisé en ce que**
le calculateur (5) pondère le chemin principal (21) et les chemins auxiliaires (22) et détermine le chemin comme nouveau chemin principal (21) dont la direction à l'endroit des positions présumées correspond le mieux avec celle de l'éventail des directions (23).

8. Système de localisation selon l'une quelconque des revendications précédentes,
**caractérisé en ce que**
le calculateur (5) détermine, à l'endroit des positions présumées, les différentes directions de déplacement en tenant compte des tracés routiers dans la zone partielle de la carte de mémoire enregistrée, en comparant et en définissant à partir des nouveaux chemins principaux, le chemin ayant la plus grande concordance.
